(19) Europäisches Patentamt / European Patent Office / Office européen des brevets

(11) **EP 3 982 299 A1**

(12) **EUROPEAN PATENT APPLICATION**

(43) Date of publication:
**13.04.2022 Bulletin 2022/15**

(21) Application number: **20306187.4**

(22) Date of filing: **09.10.2020**

(51) International Patent Classification (IPC):
*G06N 3/08* *(2006.01)*

(52) Cooperative Patent Classification (CPC):
**G06N 3/084**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Naver Corporation**
**Seongnam-si, Gyeonggi-do 13561 (KR)**

(72) Inventors:
• **Weinzaepfel, Philippe**
  **38330 Montbonnot-Saint-Martin (FR)**
• **Revaud, Jérôme**
  **38240 Meylan (FR)**
• **Castells, Thibault**
  **38500 La Buisse (FR)**

(74) Representative: **Grünecker Patent- und**
**Rechtsanwälte**
**PartG mbB**
**Leopoldstraße 4**
**80802 München (DE)**

(54) **SUPERLOSS: A GENERIC LOSS FOR ROBUST CURRICULUM LEARNING**

(57) A computer-implemented method (400) is provided for training a neural network to perform a data processing task. The computer-implemented method comprises: for each data sample of a set of labeled data samples: computing (430) a task loss for the data sample using a first loss function for the data processing task; computing (440) a second loss for the data sample by inputting the task loss into a second loss function, the second loss function automatically computing a weight of the data sample based on the task loss computed for the data sample to estimate reliability of a label of the data sample predicted by the neural network; and updating (450) at least some learnable parameters of the neural network using the second loss.

FIG. 1

EP 3 982 299 A1

**Description**

**Technical Field**

The present disclosure relates to a loss function for training neural networks using curriculum learning. In particular, the present disclosure relates to a method for training a neural network to perform a task, such as image processing task, using a task-agnostic loss function that is appended on top of the loss associated with the task.

**Background**

Curriculum Learning is a technique inspired by the learning process of humans and animals. The key idea is to feed training samples to the learner (the neural network) in order of increasing difficulty, just like humans naturally learn easier concepts before more complex ones. When applied to machine learning, curriculum learning essentially boils down to designing a sampling strategy (a curriculum) that would present easy samples to the model before harder ones. Generally speaking, easy samples are samples for which a neural network makes a good prediction after a small number of training steps, whereas hard samples are samples for which a neural network makes a bad prediction after a small number of training steps. While it is generally complex to estimate *a priori* the difficulty of a given sample, recent works have shown that curriculum learning can be formulated dynamically in a self-supervised manner. The key idea is to somehow estimate the importance (or weight) of each sample directly during training based on the observation that easy and hard samples behave differently and can therefore be separated.

Curriculum learning was shown to be effective at improving the model performance and its generalization power in earlier works such as by Basu S. et al. ("Teaching Classification Boundaries to Humans", AAAI, 2013), Bengio Y. et al. ("Curriculum Learning", ICML, 2009), Hacohen G. et al. ("On the power of curriculum learning in deep networks", ICML, 2019), Kahn F. et. al. ("How do humans teach: On curriculum learning and teaching dimension", NIPS, 2011) and Sheng G. et al., "Curriculumnet: Weakly-supervised learning for large-scale web images", ECCV, 2018). However, in these earlier works the order is determined prior to the training, leading to potential inconsistencies between the fixed curriculum and the model being learned.

To remedy this, Kumar M.P. et al. ("Self-paced learning for latent variable models", NIPS, 2010) proposed the concept of self-paced learning where the curriculum is constructed without supervision in a dynamic way to adjust to the pace of the learner. This is possible because easy and hard samples behave differently during training in terms of their respective loss, allowing them to be somehow discriminated. In this context, curriculum learning is accomplished by predicting the easiness of each sample at each training iteration in the form of a weight, such that easy samples receive larger weights during the early stages of training and conversely. Another benefit of this type of approach, aside from improving the model generalization, is their resistance to noise. This is due to the fact that noisy samples (i.e. samples with wrong labels) tend to be harder for the model and thus receive smaller weights throughout training, effectively discarding them. This side effect makes these methods especially attractive when clean annotated data are expensive while noisy data are widely available and cheap.

Nonetheless, existing approaches for automatic curriculum learning suffer from two important drawbacks that drastically limit their applicability. First, current methods overwhelmingly focus and specialize on the classification task, even though the principles mentioned above are general and can potentially apply to other tasks. Second, they all require important changes in the training procedure, often requiring dedicated training schemes, involving multi-stage training with or without special warm-up periods, extra learnable parameters and layers, or a clean subset of data.

A type of loss functions, referred to herein as confidence-aware loss-functions, has recently been introduced for a variety of tasks and backgrounds. Consider a dataset $\{(x^i, y^i)\}_{i=1}^{N}$, where sample $x^i$ has label $y^i$, and let $f(\cdot)$ be a trainable predictor to optimize in the context of empirical risk minimization. Compared to traditional loss functions of the form loss $\ell(f(x^i), y^i)$, confidence-aware loss functions take an additional learnable parameter as input which represents the sample confidence $\sigma^i \geq 0$. Confidence-aware loss functions can therefore be written as $\ell(f(x^i), y^i, \sigma^i)$.

The confidence-learning property solely depends on the shape of the confidence-aware loss function, which can be summarized as two properties: (a) a correctly predicted sample is encouraged to have a high confidence and an incorrectly predicted sample is encouraged to have a low confidence, and (b) at low confidences, the loss is almost constant. Said otherwise, a confidence-aware loss function modulates the loss of each sample with respect to its confidence parameter. These properties are particularly interesting in the context of dynamic curriculum learning as they allow to learn the confidence, i.e. weight, of each sample automatically through back-propagation and without further modification of the learning procedure.

This was recently shown by Saxena S. et al. ("Data parameters: a new family of parameters for learning a differentiable curriculum", NeurIPS, 2019) for the classification task with a modified confidence-aware cross-entropy loss. As a result, jointly minimizing the network parameters and the confidence parameters via standard stochastic gradient descent leads to accurately estimate the reliability of each prediction, i.e. the difficulty of each sample, via the confidence parameter. The modified cross-entropy loss introduces for classification a tempered version of the cross-entropy loss where a sample-dependent temperature scales logits before computing the softmax:

$$\ell_{DataParams}(z, y, \sigma) = -log\left(\frac{\exp(\sigma z_y)}{\sum_j \exp(\sigma z_j)}\right)$$

where $z \in \mathbb{R}^C$ are the logits for a given sample (C is the number of classes), $y \in \{1, ..., C\}$ its ground-truth class and $\sigma > 0$ its confidence (i.e. inverse of the temperature). Interestingly, this loss transforms into a robust 0-1 loss (i.e. step function) when the confidence tends to infinity:

$$\lim_{\sigma \to +\infty} \ell_{DataParams}(z, y, \sigma) = \begin{cases} 0, & if\ z_y > max_j z \\ +\infty, & otherwise \end{cases}$$

A regularization term equal to $\lambda log(\sigma)^2$ is added to the loss to prevent $\sigma$ to blow up. While the modified cross-entropy loss handles the case of classification well, similarly to previously-proposed confidence-aware losses, it hardly generalizes to other tasks.

Another confidence-aware loss function is the introspection loss (Novotny D. et al., "Self-supervised learning of geometrically stable features through probabilistic introspection", CVPR, 2018) which was introduced in the context of keypoint matching between different class instances. It can be rewritten from the original formulation in a more compact form as:

$$\ell_{introspection}(s, y, \sigma) = log\left(\frac{\exp(\sigma) - 1}{\sigma}\right) - \sigma ys$$

where $s \in \{-1,1\}$ is the similarity score between two keypoints computed as a dot-product between their representation, $y \in \{-1,1\}$ is the ground-truth label for the pair and $\sigma > 0$ is an input dependent prediction of the reliability of the two keypoints. Note that this loss hardly generalizes to other tasks as it is specially designed to handle similarity scores in the range [0,1] with binary labels.

Reliability loss from R2D2 (Revaud J. et al., "R2D2: Reliable and repeatable detector and descriptor", NeurIPS, 2019) was introduced in the context of robust patch detection and description. The reliability loss from R2D2 serves to jointly learn a patch representation along with its reliability (i.e. a confidence score for the quality of the representation), which is also an input dependent output of the network. It is formulated as:

$$\ell_{R2D2}(z, y, \sigma) = \sigma\left(1 - AP(z. y)\right) + \frac{1 - \sigma}{2}$$

where z represents a patch descriptor, *y* its label and $\sigma \in [0,1]$ its reliability. The score for the patch is computed in the loss in term of differentiable Average-Precision (AP). There are two shortcomings with this formulation of a confidence-aware loss function, however. First, the reliability $\sigma$ is not an unconstrained variable (it is bounded between 0 and 1), making it difficult to regress in practice. Second, due to the lack of regularization, the optimal reliability is actually either 0 or 1, depending on whether *AP(z, y)* < 0.5 or not. In other words, for a given fixed *AP(z, y)* < 0.5, the loss is minimized by setting $\sigma = 0$ and vice versa, i.e. it only encourages the reliability to take extreme values.

Multi-task loss (Kendall A. et al., "Multi-task learning using uncertainty to weigh losses for scene geometry and semantics", CVPR, 2018) is a scheme to automatically learn the relative weight of each loss in a multi-task context. The intuition is to model the network prediction as a probabilistic function that depends on the network output and an uncontrolled homoscedastic uncertainty. Then, the log likelihood of the model is maximized as in maximum likelihood inference. It leads to the following minimization objective, defined according to several task losses $\{\ell_1 ..., \ell_n\}$ with their associated uncertainties $\{\sigma_1, ..., \sigma_n\}$ (i.e. inverse confidences):

$$\ell_{multitask}(\ell_1, \ldots, \ell_n, \sigma_1, \ldots, \sigma_n) = \sum_{i=1}^{n} \frac{\ell_i}{2\sigma_i^2} + log\sigma_i$$

In practice, the confidence is learned via an exponential mapping $s = log\sigma^2$ to ensure that $\sigma > 0$. Note that this approach makes the implicit assumption that task losses are positive with a minimum $min \ell_i = 0 \forall i$, which is not guaranteed in general. In the case where one of the task loss would be negative, nothing would indeed prevent the multi-task loss to blow up to $-\infty$.

Learning on noisy data is a closely related topic, due to the inherent hardness of noisy samples. In this context, curriculum learning turns out to be particularly appropriate as it automatically downweights samples based on their difficulty, effectively discarding noisy samples. The Curriculum Loss of Lyu Y. et al. ("Curriculum loss: Robust learning and generalization against label corruption", ICLR, 2020), for instance, adaptively selects samples for model training, avoiding noisy samples that have a larger loss.

Although not strictly related to curriculum loss, a series of works leveraging similar principle has been proposed. O2U-Net (Jinchi H. et al., "O2U-Net: A simple noisy label detection approach for deep neural networks", ICCV, 2019) distinguishes correct samples from noisy ones by monitoring their loss while varying the learning rate. Arazo E. et al. ("Unsupervised label noise modeling and loss correction", ICML, 2019) and Li J. et al. ("Dividemix: Learning with noisy labels as semi-supervised learning", ICLR, 2020) model the per-sample loss distribution with a bi-modal mixture model used to dynamically divide the training data into clean and noisy sets. Ensembling methods are also popular to prevent the memorization of noisy samples. For instance, SELF (Nguyen Duc T. et al., "SELF: learning to filter noisy labels with self-ensembling", ICLR, 2019) progressively filters samples from easy to hard ones at each epoch, which can be viewed as curriculum learning. Co-teaching (Han B. et al., "Co-teaching: Robust training of deep neural networks with extremely noisy labels", ICCV, 2019) and similar methods train two semi-independent networks that exchange information about noisy samples to avoid their memorization. However, these approaches are developed specifically for a given task (e.g., classification) and hardly generalize to other tasks. Furthermore, they require a dedicated training procedure which can be cumbersome.

Accordingly, prior art approaches are usually limited to a specific task (e.g., classification) and require extra data annotations, layers or parameters as well as a dedicated training procedure.

It would be desirable to provide a generalized and simplified loss function that overcomes the disadvantages of the prior art. In particular, it would be desirable to provide a loss function to estimate reliability of data sample labels predicted by the neural network, where the loss function can be applied to any loss and thus to any task, can scale-up to any number of samples, requires no modification of the learning procedure, and has no need for extra data parameters.

## Summary

Described herein is a simple and generic method that can be applied to a variety of losses and tasks without any change in the learning procedure. It consists in appending a generic loss function on top of any existing task loss, hence its name: SuperLoss. The main effect of SuperLoss is to automatically downweight the contribution of samples with a large loss (i.e. hard samples), effectively mimicking the core principle of curriculum learning. SuperLoss prevents the memorization of noisy samples, making it possible to train from noisy data even with non-robust loss functions.

SuperLoss allows training models that will perform better, especially in the case where training data are corrupted by noise. This is extremely advantageous given the enormous annotation efforts necessary to build very large-scale datasets and previously thought as unavoidable to reach high performance. Having to annotate a large-scale dataset might be a real barrier for entering new businesses, because of both the financial aspects and the time it would take. In contrast, noisy datasets can be automatically collected from the web at a large scale for a small cost.

In an embodiment a computer-implemented method for training a neural network to perform a data processing task is provided. The method comprises, for each data sample of a set of labeled data samples: computing a task loss for the data sample using a first loss function for the data processing task; computing a second loss for the data sample by inputting the task loss into a second loss function, the second loss function automatically computing a weight of the data sample based on the task loss computed for the data sample to estimate reliability of a label of the data sample predicted by the neural network; and updating at least some learnable parameters of the neural network using the second loss. The data samples may be one of image samples, video samples, text content samples and audio samples.

Because the weight of the data sample is automatically determined for the data sample based on the task loss of the data sample, the method provides the advantage that there is no need to wait for a confidence parameter to converge, meaning that the training method converges more rapidly.

According to an aspect, automatically computing a weight of the data sample based on the task loss computed for the data sample may comprise increasing the weight of the data sample if the task loss is below a threshold value and decreasing the weight of the data sample if the task loss is above the threshold value.

According to an aspect, the threshold value may be computed using a running average of the task loss or an exponential running average of the task loss with a fixed smoothing parameter.

According to an aspect, the second loss function may comprise a loss-amplifying term based on a difference between the task loss and the threshold value.

According to an aspect, the second loss function is given by $min\{l - \tau, \lambda(l - \tau)\}$ with $0 < \lambda < 1$, where $l$ is the task loss, $\tau$ is the threshold value and $\lambda$ is an hyperparameter of the second loss function.

According to an aspect, the method may further comprise computing a confidence value of the data sample based on the task loss. Computing the confidence value of the data sample based on the task loss may comprise determining a value of a confidence parameter that minimizes the second loss function for the task loss. The confidence value may depend on $\dfrac{(\ell-\tau)}{\lambda}$, where $\ell$ is the task loss, $\tau$ is the threshold value and $\lambda$ is a regularization hyperparameter of the second loss function. The loss-amplifying term may be given by $\sigma^*(\ell - \tau)$, where $\sigma^*$ is the confidence value.

Thus, because the confidence value is determined for each respective data sample using an efficient closed-form solution, the method is much simpler and more efficient.

According to an aspect, the second loss function may comprise a regularization term that given by $\lambda(log\sigma^*)^2$, where $\sigma^*$ is the confidence value.

According to an aspect, the second loss function may be given by $\min_{\sigma}(\sigma(\ell - \tau) + \lambda(log\sigma)^2),$ where $\sigma$ is the confidence parameter, $\ell$ is the task loss, $\tau$ is the threshold value and $\lambda$ is a hyperparameter of the second loss function.

According to an aspect, the second loss function may be a monotonically increasing concave function with respect to the task loss.

According to an aspect, the second loss function may be a homogeneous function.

According to an embodiment, a neural network trained using the method above to perform a data processing task is provided. The data processing task may be an image processing task. The image processing task may be one of classification, regression, object detection and image retrieval.

According to an embodiment, there is provided a computer-readable storage medium having computer-executable instructions stored thereon, which, when executed by one or more processors perform the method above.

According to an embodiment, there is provided an apparatus comprising processing circuitry, the processing circuitry being configured to perform the method above.

### Description of the Figures

The accompanying drawings are incorporated into and form a part of the specification for the purpose of explaining the principles of the embodiments. The drawings are not to be construed as limiting the embodiments to only the illustrated and described embodiments of how they can be made and used. Further features and advantages will become apparent from the following and more particularly from the description of the embodiments, as illustrated in the accompanying drawings, wherein:

**FIG. 1** is a block diagram illustrating a neural network being trained using the techniques described herein.

**FIGS. 2A** and **2B** are plots showing losses produced by an easy sample and a hard sample during training.

**FIG. 3** is a plot showing SuperLoss as a function of a normalized input loss.

**FIG. 4** is a flow diagram of a method of training a neural network using the SuperLoss function.

**FIG. 5** is a plot showing the mean absolute error for the regression task on digit regression on the MNIST dataset and on human age regression on the UTKFace dataset.

**FIG. 6** is a plot showing the evolution of the normalized confidence value during training.

**FIG. 7** is a plot showing the accuracy of the loss function on CIFAR-10 and CIFAR-100 datasets as a function of the proportion of noise.

**FIG. 8** is a plot showing the impact of the regularization parameter for different proportions of noise.

**FIG. 9** is a plot showing AP50 on Pascal VOC when using the SuperLoss for object detection with Faster R-CNN and RetinaNet.

**FIG. 10** is a plot showing model convergence during training on the noisy Landmarks-full dataset.

**FIG. 11** illustrates an example of architecture in which the disclosed methods may be performed.

## Detailed Description

Described herein are techniques for training neural networks using curriculum learning. Specifically, the SuperLoss function - a generalized loss function that is readily applicable to any task - is described. For purposes of explanation, numerous examples and specific details are set forth in order to provide a thorough understanding of the described embodiments. Embodiments as defined by the claims may include some or all of the features in these examples alone or in combination with other features described below, and may further include modifications and equivalents of the features and concepts described herein. The illustrative embodiments will be described with reference to the drawings wherein like elements and structures are indicated by like reference numbers. Further, where an embodiment is a method, steps and elements of the method may be combinable in parallel or sequential execution. As far as they are not contradictory, all embodiments described below can be combined with each other.

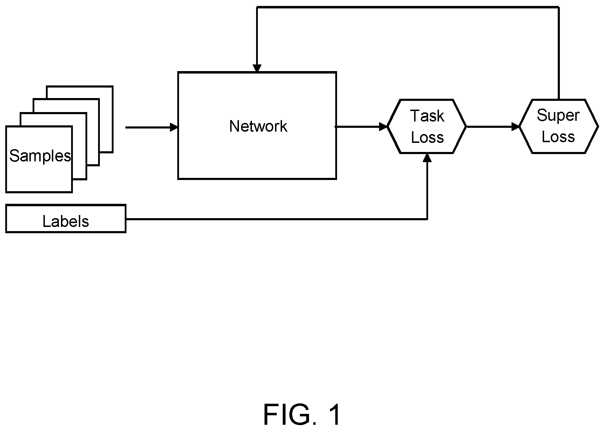

**FIG. 1** is a block diagram illustrating supervised training of a neural network using SuperLoss. The neural network is configured to receive as input a set of labeled data samples $\{(x^i, y^i)\}_{i=1}^N$, where sample $x^i$ has label $y^i$, is input into the neural network. The set of labeled data samples may be one of a set of labeled sample images, a set of labeled text documents and a set of labeled audio content.

The neural network is configured to process each of the data samples to generate a prediction for the respective data sample. The loss function corresponding to the task that the neural network is being trained to perform (also referred to herein as the first loss function) indicates the error between the prediction output by the network and a target value for the data sample. For example, in supervised learning, the neural network generates a prediction for the label of the data sample. The predicted label for each data sample is then compared to the ground truth label of the data sample. The difference between the ground truth label and the predicted label is the task loss output by the neural network.

In known neural networks, the task loss is used to update at least some of the learnable parameters of the neural network using backpropagation. However, as shown in FIG. 1, a second loss function (also referred to herein as the SuperLoss function) is appended to the task loss of the neural network. The role of the SuperLoss function is to monitor the task loss of each data sample during training and to automatically determine the sample contribution dynamically by applying the core principle of curriculum learning. The SuperLoss function should increase the weight of easy samples (those with a small task loss) and decrease the weight of hard samples (those with a high task loss). In other words, the SuperLoss function computes a weight of a data sample based on the task loss computed for the data sample to estimate reliability of a label of the data sample predicted by the neural network.

The SuperLoss function is task-agnostic, meaning that it can be applied to the task loss without any change in the training procedure. Accordingly, the neural network may be any type of neural network having a corresponding loss function suitable for processing the data samples. For example, the neural network may be trained to perform an image processing task, such as image classification, regression, object detection, image retrieval etc. The neural network may be suitable to perform tasks in other domains that rely on machine learning to train a model, such as natural language processing, content recommendation etc.

The SuperLoss function is defined based on purely pragmatic and general considerations: the weight of samples with a small loss should be increased and the weight of samples with a high loss should be decreased.

More specifically, a requirement for the SuperLoss function is that the SuperLoss function is a monotonically increasing concave function that amplifies the reward (i.e. negative loss) for easy samples (where the prediction loss is below the threshold value) while strongly flattening the loss for hard samples (where the prediction loss is above the threshold value). In other words, $SL^*(\ell_2) \geq SL^*(\ell_1)$ if $\ell_2 \geq \ell_1$. The monotonically increasing property can be mathematically written as $SL^*(\ell_2) \geq SL^*(\ell_1)$ if $\ell_2 \geq \ell_1$. The fact to emphasize samples with lower losses than the one with higher input losses can be express as $SL^{*'}(\ell_2) \leq SL^{*'}(\ell_1)$ if $\ell_2 \geq \ell_1$, where $SL^{*'}$ is the derivative.

Optionally, the SuperLoss function may be a homogenous function, meaning that it can handle an input loss of any given range and thus any kind of tasks. More specifically, this means that the shape of the SuperLoss stays exactly the same, up to a constant scaling factor $\gamma > 0$, when the input loss and the regularization parameter are both scaled by the same factor $\gamma$. In other words, it suffices to scale accordingly the regularization parameter and the learning rate to accommodate for an input loss of any given amplitude.

According to an embodiment, the SuperLoss function takes one input, the task loss of the neural network. This is in contrast to prior art confidence-aware loss functions that take an additional learnable parameter representing the sample confidence as input. For each sample data item, the SuperLoss function computes the weight of the data sample according to the task loss for the data sample. The SuperLoss function outputs a loss (also referred to herein as the second loss and as the super loss) that is used for backpropagation to update at least some learnable parameters of the neural network.

The SuperLoss is composed of a loss-amplifying term and a regularization term controlled by the hyper-parameter $\lambda \geq 0$ and is given by:

$$SL^*(\ell) = \min\{\ell - \tau, \lambda(\ell - \tau)\} \text{ with } 0 < \lambda < 1 \qquad (1)$$

where $\ell$ is the task loss of the neural network, $\tau$ is a threshold value that separates easy samples from hard samples based on their respective loss, and $\lambda$ is the regularization hyperparameter. The threshold value $\tau$ is either fixed based on prior knowledge of the task, or computed for each data sample. For example, the threshold value may be determined using a running average of the input loss or an exponential running average of the task loss with a fixed smoothing parameter.

In some embodiments, the SuperLoss function takes into account a confidence value associated with a respective data sample. A confidence-aware loss function that takes two inputs, namely, the task loss $\ell(f(x^i), y^i)$ and a confidence parameter $\sigma^i$, which represents the sample confidence, is given by:

$$SL\left(\ell\left(f\left(x^i\right), y^i, \sigma^i\right)\right) = \sigma^i \times \left(\ell\left(f\left(x^i\right), y^i\right) - \tau\right) + \lambda(log\sigma^i)^2 \qquad (2)$$

However, in SuperLoss, in contrast to prior art confidence-aware loss functions, the confidence parameter $\sigma^i$ is not learned, but is instead automatically deduced for each sample from the respective task loss of the sample. Accordingly, instead of waiting for the confidence parameters $\sigma^i$ to converge, SuperLoss directly uses the converged value $\sigma^*(\ell) = argmin_\sigma SL(\ell, \sigma)$ that depends only on the task loss $\ell$. As a consequence, the confidence parameters $\sigma^i$ do not need to be optimized and up-to-date with the sample status, making SuperLoss depend solely on the task loss:

$$SL^*(\ell) = SL(\ell, \sigma^*(\ell)) \qquad (3)$$

The optimal confidence $\sigma^*(\ell)$ has a closed form solution that is computed by finding the confidence value $\sigma^*(\ell)$ that minimizes $SL(\ell, \sigma)$ for a given task loss $\ell$. As a corollary, it means that the SuperLoss can handle a task loss of any range (or amplitude), i.e. $\lambda$ just needs to be set appropriately.

Accordingly, for each training sample, the SuperLoss is given by:

$$SL_\lambda^*(\ell, \sigma) = \sigma(\ell - \tau) + \lambda(log\sigma^i)^2 \qquad (4)$$

where the task loss $\ell$ and the confidence $\sigma$ correspond to an individual training sample. An exponential mapping $\sigma = e^c$ is used to ensure that $\sigma > 0$. Using the exponential mapping for confidence, the equation is rewritten as:

$$SL^*(\ell) = \min_\sigma \sigma(\ell - \tau) + \lambda(log\sigma)^2$$

$$= \min_x e^x(\ell - \tau) + \lambda x^2$$

$$= \min_x \beta e^x + x^2,$$

where

$$\lambda > 0, \ \beta = \frac{\ell - \tau}{\lambda} \text{ and } \sigma = e^x.$$

The function to minimize admits a global minimum in the case where $\beta \geq 0$, as it is the sum of two convex functions. Otherwise, due to the negative exponential term it diverges towards $-\infty$ when $x \rightarrow +\infty$. However, in the case where $\beta_0 < \beta < 0$ with $\beta_0 = \frac{2}{e}$, the function admits a single local minimum located in $x \in [0,1]$ (see below), which corresponds to the value the confidence would converge to assuming that it initially starts at $\sigma = 1$ ($x = 0$) and moves continuously by infinitesimal displacements. In the case where it exists (i.e. when $\beta_0 < \beta$), the position of the minimum is given by solving the derivative:

$$\frac{\partial}{\partial x}(\beta e^x + x^2) = 0$$

$$\Leftrightarrow \beta e^x + 2x = 0$$

$$\Leftrightarrow \beta e^x = -2x$$

$$\Leftrightarrow \frac{\beta}{2} = -x \, exp(-x).$$

This is an equation of the form $z = y e^y$ with $\{z, y\} \in \mathbb{R}^2$, a well-known problem having $y = W(z)$ for a solution, where $W$ stands for the Lambert W function. The closed form for $x$ in the case where $\beta_0 < \beta$ is thus generally given by:

$$x = -W\left(\frac{\beta}{2}\right)$$

$$\Leftrightarrow log\sigma^* = -W\left(\frac{\beta}{2}\right)$$

$$\Leftrightarrow \sigma^* = e^{-W\left(\frac{\beta}{2}\right)} \qquad (5)$$

Due to the fact that the Lambert W function is monotonically increasing, the minimum is located in $x \in [-\infty, 0]$ when $\beta \geq 0$ and in $x \in [0,1]$ when $\beta_0 < \beta < 0$. Although the Lambert W function cannot be expressed in term of elementary functions, it is implemented in most modem math libraries[1]. For example, a precomputed piece-wise approximation of the function may be used, which can be easily implemented on GPU in PyTorch using the grid_sample () function. In the case where $\beta \leq \beta_0$, the optimal confidence is capped at $\sigma^* = e^{-W\left(\frac{\beta_0}{2}\right)} = e$. In summary:

$$\sigma_\lambda^*(\ell) = e^{-W\left(\frac{1}{2}max(\beta_0,\beta)\right)}, \text{ with } \beta = \frac{\ell-\tau}{\lambda} \qquad (6)$$

Thus, the optimal confidence $\sigma^*(\ell)$ has a closed form solution that only depends on the ratio $\frac{\ell-\tau}{\lambda}$.

The SuperLoss becomes equivalent to the original input loss when $\lambda$ tends to infinity. As a corollary of equation (6), the following is obtained:

$$\lim_{\lambda \rightarrow +\infty} \sigma_\lambda^* = e^{-W(0)} = 1,$$

hence

$$\lim_{\lambda \to +\infty} SL_\lambda^*(\ell) = \lim_{\lambda \to +\infty} \sigma_\lambda^*(\ell)(\ell - \tau) + \lambda(log\sigma_\lambda^*(\ell))^2,$$

$$= \lim_{\lambda \to +\infty} \ell - \tau + \lambda W \left(\frac{\ell - \tau}{2\lambda}\right)^2$$

$$= \lim_{\lambda \to +\infty} \ell - \tau + \frac{(\ell - \tau)^2}{4\lambda}$$

$$= \ell - \tau.$$

Since $\tau$ is considered constant, the SuperLoss is equivalent to the input loss $\ell$ at the limit.

Due to the fact that $\sigma^*$ only depends on the ratio $\frac{(\ell - \tau)}{\lambda}$ (see equation 6) and if it is assumed that $\tau$ is proportional to $\ell$ because it is computed as a running average of $\ell$, then:

$$\sigma_{\gamma\lambda}^*(\gamma\ell) = \sigma_\lambda^*(\ell) \qquad (7)$$

It naturally follows that:
[1] For example, it is available in python as scipy. special. lambertw

$$SL_{\gamma\lambda}^*(\gamma\ell) = \sigma_{\gamma\lambda}^*(\gamma\ell)(\gamma\ell - \gamma\tau) + \gamma\lambda(log\sigma_{\gamma\lambda}^*\gamma\ell))^2$$

$$= \sigma_\lambda^*(\ell)(\gamma\ell - \gamma\tau) + \gamma\lambda(log\sigma_\lambda^*(\ell))^2$$

$$= \gamma(\sigma_{\gamma\lambda}^*(\ell)(\ell - \tau) + \lambda(log\sigma_\lambda^*(\ell))^2)$$

$$= \gamma SL_\lambda^*(\ell) \qquad (8)$$

In other words, the SuperLoss is a homogeneous function, i.e. $SL_{\gamma\lambda}^*(\gamma\ell) = \gamma S_\lambda^*(\ell), \forall_\gamma > 0.$

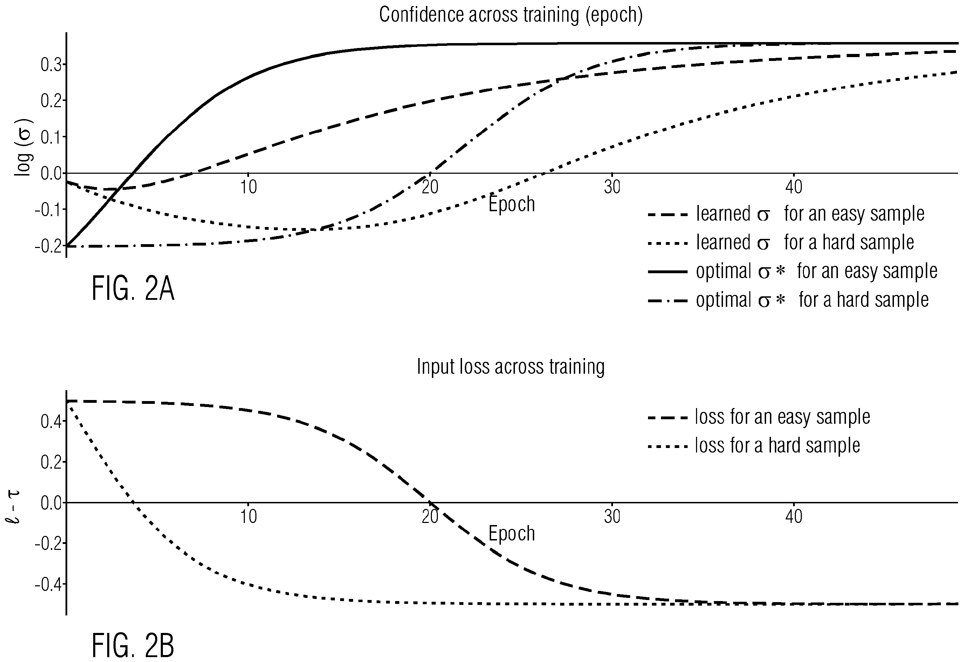

Deducing the confidence of each sample automatically from the prediction loss as described above provides many advantages over learning the confidence of each sample via back propagation. First, it does not require an extra learnable parameter per sample, meaning SuperLoss can scale for tasks where the number of samples can be almost infinite. Second, learning the confidence naturally introduces a delay (i.e. the times convergence), and this potential inconsistency between the true status of the sample and its respective confidence. This is illustrated by **FIG. 2A** which shows typical losses produced by an easy and a hard sample during training and **FIG. 2B** which shows (a) their respective confidence when learned via back propagation using $SL(\ell, \sigma)$ (dotted lines) and (b) their optimal confidence $\sigma^*$ (plain lines). In contrast to using the optimal confidence, learning it induces a significant delay between the moment a sample becomes easy (its loss passes under $\tau$) and the moment its confidence becomes greater than 1. Third, it adds several hyper parameters on top of the baseline approach for the dedicated optimizes such as learning rate weight decay.

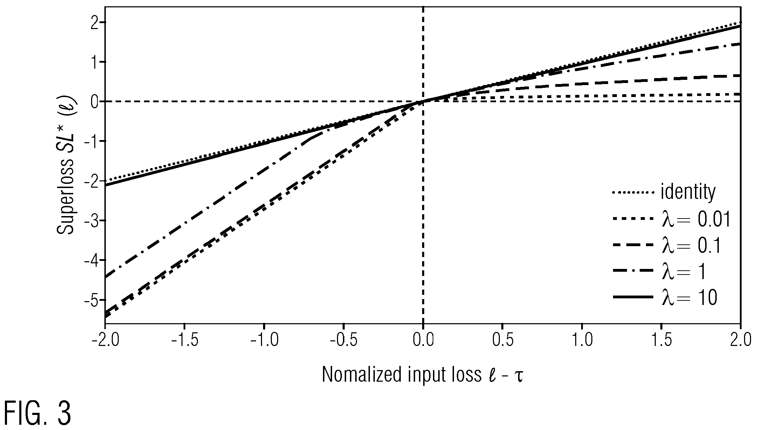

**FIG. 3** illustrates SuperLoss $SL^*(\ell) = SL(\ell, \sigma^*(\ell))$ as a function of the normalized input loss $\ell - \tau$, showing that this formulation meets the requirements outlined above. Each curve corresponds to a different value of the regularization hyperparameter, $\lambda$.

Regardless of the manner the confidence intervenes in the formula, the key property for the SuperLoss function is that the gradient of the loss with respect to the network parameters should monotonically increase with the confidence, all other parameters staying fixed. For example, the $(log\sigma^i)^2$ term of equation (4), which acts as a log-normal prior on the scale parameter, may be replaced by a different prior. Another possibility is to use a mixture model in which the original loss is the log-likelihood of one mixture component and a second component models the noise (e.g. as a uniform distribution over the labels).

As can be seen from the above, there are some important differences between SuperLoss and prior art curriculum losses. First, the SuperLoss is applied individually for each sample at the lowest level. Second, the SuperLoss includes an additional regularization term $\lambda$ that allows the SuperLoss to handle losses of different amplitudes and different levels of noise in the training set. Lastly, the SuperLoss makes no assumption on the range and minimum value of the loss, thereby introducing a dynamic threshold and a squared log of the confidence for the regularization. The confidence directly corresponds to the weighting of the sample losses in the SuperLoss, making it easily interpretable. However, the relation between confidence and sample weighting is not necessarily obvious for prior art confidence-aware losses.

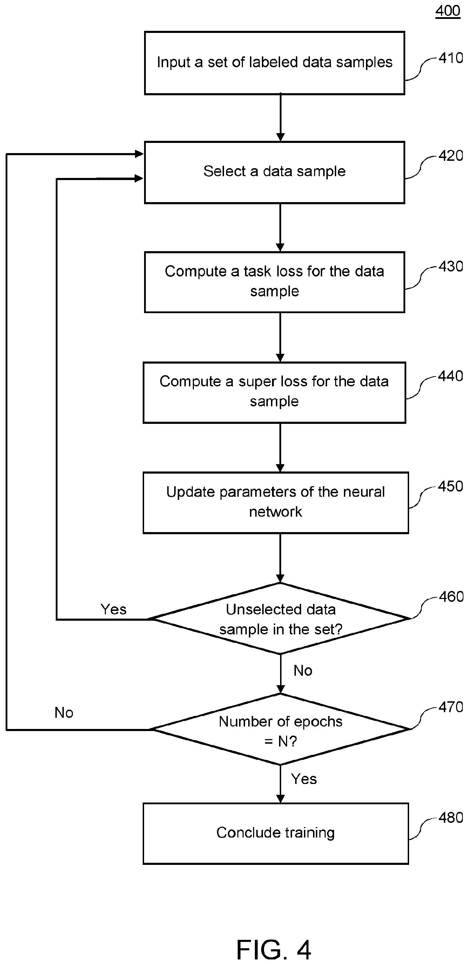

**FIG. 4** is a flow diagram of a method 400 of training a neural network using the SuperLoss function described above. At step 410, a batch of data samples to be processed by the neural network is obtained, where a batch comprises a number of randomly-selected data samples.

The neural network then computes, at step 420, a task loss using a first loss function corresponding to the task to be performed by the neural network. The task loss corresponds to an error in the prediction for each data sample of the batch. The neural network outputs the task loss, which is then input into a second loss function (the SuperLoss function). Based on the task loss, the SuperLoss function computes a second loss (the super loss) for each data sample of the batch (step 430). The SuperLoss function computes the weight of each data sample based on the task loss associated with the respective data sample. Specifically, as described above, the weight of the data sample is increased if the task loss is below a threshold value, $\tau$, and the weight of the data sample is decreased if the task loss is above the threshold value.

In some embodiments, as described above, computing the SuperLoss function may comprise computing a value of the confidence parameter $\sigma^*$ based on the task loss for the respective data sample. Computing the value of the confidence parameter $\sigma^*$ comprises determining the value of the confidence parameter that minimizes the SuperLoss function for the task loss associated with the data sample.

Once it is determined that there are no unselected data samples in the batch, the second loss is output by the SuperLoss function. At step 440, the second loss is used to update at least some of the learnable parameters of the neural network.

At step 450, a determination is made as to whether there are more batches of data samples to be processed by the neural network. If there remains an unselected batch of data samples, the method returns to step 410, where another batch is obtained. The set of labeled data samples is processed a fixed number of times (epochs) N, where each of the data samples of the set is selected and processed once in each epoch. If all batches of data samples have been processed, a determination is made at step 460 as to whether N epochs have been performed. If fewer than N epochs have been performed, the method returns to step 410. If N epochs have been performed, training is concluded at step 470.

At this stage, the neural network has been trained and the trained neural network can be tested and used to process unseen data in the usual manner.

**Applications**

As described above, the SuperLoss function is a task-agnostic loss function that may be used to train a neural network to perform a variety of tasks. In some embodiments, the neural network is trained to perform image processing tasks such as classification, regression, object detection and image retrieval.

**Classification.** The Cross-Entropy loss (CE) may be straightforwardly plugged into the SuperLoss: $SL^*_{CE} = SL^*(\ell_{CE}(f(x), y))$. The threshold value $\tau$ may be fixed and set to $\tau = logC$, where C is the number of classes, representing the cross-entropy of a uniform prediction and hence a natural boundary between correct and incorrect prediction.

**Regression.** A regression loss $\ell_{reg}$ such as the smooth-L1 loss (smooth-$\ell_1$) or the Mean-Square-Error (MSE) loss ($\ell_2$) can be plugged into the SuperLoss. Note that the range of values for a regression loss drastically differs from the one of the CE loss, but this is not an issue for the SuperLoss thanks to the regularization term controlled by $\lambda$.

**Object Detection.** The SuperLoss is applied on the box classification component of two object detection frameworks: Faster R-CNN (Shaoqing R. et al., "Faster R-CNN: Towards real-time object detection with region proposal networks", NIPS, 2015) and RetinaNet (Lin, T.Y. et al., "Focal Loss for dense object detection", ICCV, 2017). Faster R-CNN classification loss is a standard cross-entropy loss $\ell_{CE}$ on which SuperLoss is plugged $SL^*_{CE}$. RetinaNet classification loss is a class-balanced focal loss (FL): $\ell_{FL}(p^i, y^i) = -\alpha_{y^i}\left(1 - p^i_{y^i}\right)^{\gamma}\log(p^i_{y^i})$ with $p^i$ the probabilities

predicted by the network for each box obtained with a softmax on the logits $z^i = f(x^i)$. In contrast to classification, object detection typically deals with an enormous number of negative detections, for which it is infeasible to store or learn individual confidences. In contrast to approaches that learn a separate weight per sample the method herein estimates the confidence of positive and negative detections on the fly from their loss only.

**Retrieval/metric learning.** SuperLoss is applied to image retrieval using the contrastive loss (Hadsell R. et al., "Dimensionality reduction by learning an invariant mapping", CVPR, 2006). In this case, the training set $\{(x^i, x^j, y^{ij})\}_{ij}$ is composed of pairs of samples labeled either positively ($y^{ij} = 1$) or negatively ($y^{ij} = 0$). The goal is to learn a latent representation where positive pairs lie close whereas negative pairs are far apart. The contrastive loss is composed of two losses: $\ell_{CL}+ (f(x^i), f(x^j)) = [\|f(x^i) - f(x^j)\|]_+$ for positive pairs ($y^{ij} = 1$) and $\ell_{CL}-(f(x^i), f(x^j)) = [m - \|f(x^i) - f(x^j)\|]_+$ for negative pairs ($y^{ij} = 0$) where m > 0 is a margin. A null margin for positive pairs is assumed as is common (Radenovic F. et al., "Fine tuning cnn image retrieval with no human annotation", IEEE trans. PAMI, 2018) and where $[\cdot]_+$ denotes the positive component). SuperLoss is applied on top of each of the two losses, i.e. with two independent thresholds $\tau$, but still sharing the same regularization parameter $\lambda$ for simplicity:

$$SL^*_{\lambda,CL}\left(f\left(x^i\right), f\left(x^j\right), y^{ij}\right) = \begin{cases} SL^*_\lambda\left(\ell_{CL}\left(f\left(x^i\right), f\left(x^j\right)\right)\right), & y^{ij} = 1 \\ SL^*_\lambda\left(\ell_{CL}\left(f\left(x^i\right), f\left(x^j\right)\right)\right), & y^{ij} = 0 \end{cases}$$

The same strategy can be applied to other metric learning losses such as the triplet loss (Weinberger K.Q. et al., "Distance metric learning for large margin nearest neighbor classification", JMLR, 2009). As for object detection, prior art approaches that explicitly learn or estimate the importance of each sample cannot be applied to metric learning because (a) the number of potential pairs or triplets is enormous, making intractable to store their weight in memory; and (b) only a small fraction of them is seen at each epoch, which prevents the accumulation of enough evidence.

## Experimental Results

Empirical evidence is presented below that the approach described above leads to consistent gains when applied to clean and noisy data sets. The results are shown for the SuperLoss function shown in equation (3). In particular, large gains are observed in the case of training from noisy data, a typical case for large-scale data sets automatically collected from the web.

## Experimental Protocol

The neural network model trained with the original task loss is referred to as the baseline. The protocol is to first train the baseline and tune its hyper-parameters (e.g., learning rate, weight decay, etc.) using held-out validation for each noise level. For a fair comparison between the baseline and the SuperLoss, the model is trained with the SuperLoss with the same hyper-parameters. Unlike most prior art techniques, special warm-up periods or other tricks are not required. Hyperparameters specific to the SuperLoss (regularization $\lambda$ and loss threshold $\tau$) are either fixed or tuned using held-out validation or cross-validation. More specifically, there are three options for $\tau$: (1) a fixed value given by prior knowledge on the task at hand; (2) a global average of the loss so far, denoted as 'Avg'; or (3) an exponential running average with a fixed smoothing parameter $\alpha = 0.9$, denoted as 'ExpAvg'. Similar to SELF (Nguyen Duc T. et al., "SELF: learning to filter noisy labels with self-ensembling", ICLR, 2019), the individual sample losses input to the SuperLoss are smoothed in equation (3) using exponential averaging with $\alpha' = 0.9$, as it makes the training more stable. This strategy is only applicable for limited size datasets; for metric learning or object detection, it is not used.

## Evaluation of Superloss for Regression

SuperLoss is evaluated on digit regression on MNIST (LeCun Y. et al., "MNIST handwritten digit database", ICPR, 2010) and on human age regression on UTKFace (Zhang Z. et al., "Age progression/regression by conditional adversarial autoencoder", CVPR, 2017), with both a robust loss (smooth-$\ell_1$) and a non-robust loss ($\ell_2$), and with different noise levels.

**Digit regression.** A toy regression experiment is performed on MNIST by considering the original digit classification problem as a regression problem. Specifically, the output dimension of LeNet is set to 1 instead of 10 and trained using a regression loss for 20 epochs using SGD (Stochastic Gradient Descent). The hyper-parameters of the baseline are cross-validated for each loss and noise level. Typically, $\ell_2$ prefers a lower learning rate compared to smooth-$\ell_1$. For

the SuperLoss, a fixed threshold $\tau = 0.5$ is experimented with as it is the acceptable bound for regressing the right integer.

**Age regression.** The larger UTKFace dataset is experimented with, which consists of 23,705 aligned and cropped face images, randomly split into 90% for training and 10% for testing. Races, genders and ages (between 1 to 116 years old) widely vary and are represented in imbalanced proportions, making the age regression task challenging. A ResNet-18 model (with a single output) is used, initialized on ImageNet as predictor and trained for 100 epochs using SGD. The hyper-parameters are cross-validated for each loss and noise level. Because it is not clear which fixed threshold would be optimal for this task, a fixed threshold is not used in the SuperLoss.

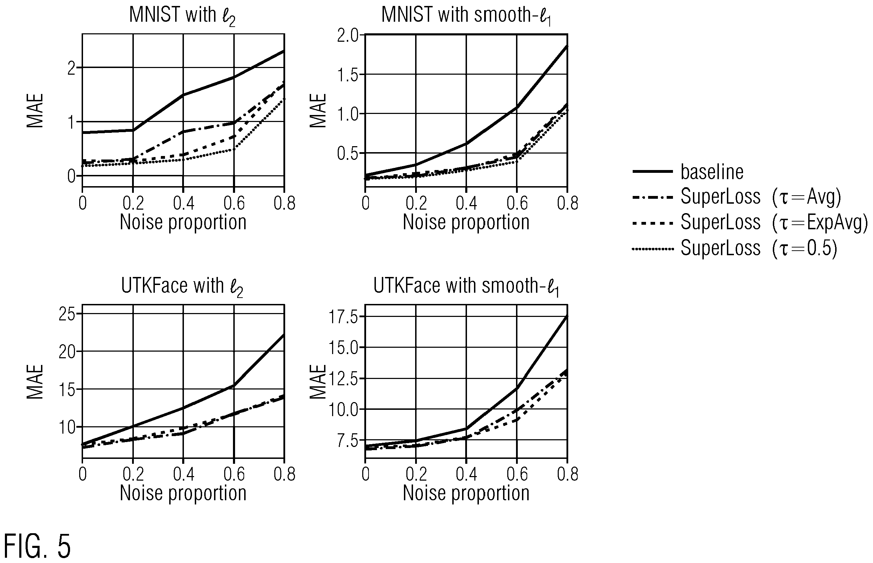

**Results.** To evaluate the impact of noise when training, noise is generated artificially using a uniform distribution between 1 and 10 for digits and between 1 and 116 for ages. FIG. 5 illustrates the mean absolute error (MAE) on digit regression and human age regression as a function of noise proportion, for a robust loss (smooth-$\ell_1$) and a non-robust loss ($\ell_2$). The MAE is aggregated over 5 runs for both datasets and both losses with varying noise proportions. Models trained using the SuperLoss consistently outperform the baseline by a significant margin, regardless of the noise level or the $\tau$ threshold. This is particularly true when the network is trained with a non-robust loss ($\ell_2$), suggesting that the SuperLoss makes a non-robust loss more robust. Even when the baseline is trained using a robust loss (smooth-$\ell_1$), the SuperLoss still significantly reduces the error (e.g., from $17.56 \pm 0.33$ to $13.09 \pm 0.05$ on UTKFace at 80% noise). Note that the two losses have drastically different ranges of amplitudes depending on the task (e.g., $\ell_2$ for age regression typically ranges in $[0, 10000]$ while smooth-$\ell_1$ for digit regression ranges in $[0, 10]$).

During cross-validation of the hyper-parameters, it is important to use a robust error metric to choose the best parameters, otherwise noisy predictions may have too much influence on the results. Thus a truncated absolute error $\min(t, |y - \hat{y}|)$ is used, where $y$ and $\hat{y}$ are the true value and the prediction, respectively, and $\tau$ is a threshold set to 1 for MNIST and 10 for UTKFace.

Table 1 provides detailed experimental results for digit regression in term of mean absolute error (MAE) aggregated over 5 runs (mean $\pm$ standard deviation) on the task of digit regression on the MINIST dataset.

**Table 1**

| Input Loss | Method | Proportion of Noise | | | | |
|---|---|---|---|---|---|---|
| | | 0% | 20% | 40% | 60% | 80% |
| MSE($\ell_2$) | Baseline | $0.80 \pm 0.87$ | $0.84 \pm 0.17$ | $1.49 \pm 0.53$ | $1.83 \pm 0.36$ | $2.31 \pm 0.19$ |
| | SuperLoss | **$0.18 \pm 0.01$** | **$0.23 \pm 0.01$** | **$0.29 \pm 0.02$** | **$0.49 \pm 0.06$** | **$1.43 \pm 0.17$** |
| Smooth-$\ell_1$ | Baseline | $0.21 \pm 0.02$ | $0.35 \pm 0.01$ | $0.62 \pm 0.03$ | $1.07 \pm 0.05$ | $1.87 \pm 0.06$ |
| | SuperLoss | **$0.18 \pm 0.01$** | **$0.21 \pm 0.01$** | **$0.28 \pm 0.01$** | **$0.39 \pm 0.01$** | **$1.04 \pm 0.02$** |

Table 2 provides detailed experimental results for age regression in term of mean absolute error (MAE) aggregated over 5 runs (mean $\pm$ standard deviation) on the task of digit regression on the UTKFace dataset.

**Table 2**

| Input Loss | Method | Proportion of Noise | | | | |
|---|---|---|---|---|---|---|
| | | 0% | 20% | 40% | 60% | 80% |
| MSE($\ell_2$) | Baseline | $7.60 \pm 0.16$ | $10.05 \pm 0.41$ | $12.47 \pm 0.73$ | $15.42 \pm 1.13$ | $22.19 \pm 3.06$ |
| | SuperLoss | **$7.24 \pm 0.47$** | **$8.35 \pm 0.17$** | **$9.10 \pm 0.33$** | **$11.74 \pm 0.14$** | **$13.91 \pm 0.13$** |
| Smooth-$\ell_1$ | Baseline | $6.98 \pm 0.19$ | $7.40 \pm 0.18$ | $8.38 \pm 0.08$ | $11.62 \pm 0.08$ | $17.56 \pm 0.33$ |
| | SuperLoss | **$6.74 \pm 0.14$** | **$6.99 \pm 0.09$** | **$7.65 \pm 0.06$** | **$9.86 \pm 0.27$** | **$13.09 \pm 0.05$** |

**Evaluation of Superloss for Image Classification**

**CIFAR-10 and CIFAR-100** (Krizhevsky A., "Learning multiple layers of features from tiny images", https.-//www.cs.toronto.edu/~kriz/learning-features-2009-TR.pdf, 2009) consist of 50K training and 10K test images belonging to $C = 10$ and $C = 100$ classes respectively. A WideResNet-28-10 model is trained with the SuperLoss, strictly following the experimental settings and protocol from Saxena S. et al. ("Data parameters: a new family of parameters for learning a differentiable curriculum", NeurIPS, 2019) for comparison purpose. We set the regularization parameter to $\lambda = 1$ for CIFAR-10 and to $\lambda = 0.25$ for CIFAR-100.

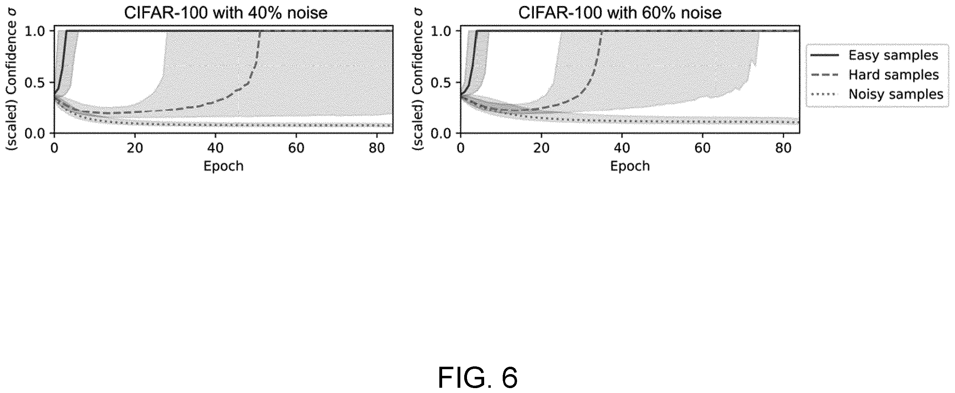

**FIG. 6** illustrates the evolution of the confidence $\sigma^*$ from Equation (3) during training (median value and 25-75% percentiles) for easy, hard and noisy samples. Hard samples are arbitrarily defined as correct samples failing to reach high confidence within the first 20 epochs of training. As training progresses, noisy and hard samples get more clearly separated.

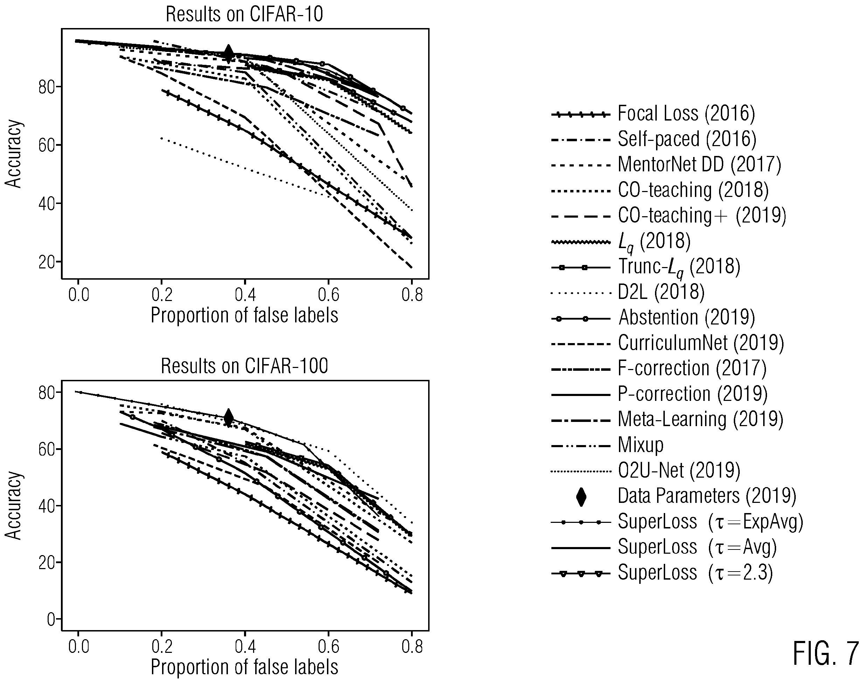

FIG. 7 shows plots of accuracy of CIFAR-10 and CIFAR-100 as a function of the proportion of noice for SuperLoss and the state of the art. The results (averaged over 5 runs) are reported for different proportions of corrupted labels. A very similar performance regardless of $\tau$ (either fixed to $logC$ or using automatic averaging) is observed. On clean datasets, the SuperLoss slightly improves over the baseline (e.g., from 95.8% $\pm$ 0.1 to 96.0% $\pm$ 0.1 on CIFAR-10) even though the performance is quite saturated. In the presence of symmetric noise, the SuperLoss generally performs better compared to recent approaches. In particular, the SuperLoss method performs on par with the confidence-aware loss proposed by Saxena S. *et al.,* confirming that confidence parameters indeed do not need to be learned. Finally, note that the SuperLoss method outperforms much more complex and specialized methods, even though classification is not specifically targeted, a special training procedure is not used, and there is no change in the network.

**WebVision** (Li W. et al., "Webvision database: Visual learning and understanding from web data", arXiv:1708.02862, 2017) is a large-scale dataset of 2.4 million images with C = 1000 classes, automatically gathered from the web by querying search engines with the class names. It thus inherently contains a significant level of noise. Following Saxena S. et al. ("Data parameters: a new family of parameters for learning a differentiable curriculum", NeurIPS, 2019), a ResNet-18 model is trained using SGD for 120 epochs with a weight decay of $10^{-4}$, an initial learning rate of 0.1, divided by 10 at 30, 60 and 90 epochs. The regularization parameter for the SuperLoss is set to $\lambda$ = 0.25 and a fixed threshold for $\tau = log(C)$ is used. The final accuracy is 66.7% $\pm$ 0.1 which represents a consistent gain of +1.2% (aggregated over 4 runs) compared to the baseline (65.5% $\pm$ 0.1). This gain is for free as the SuperLoss does not require any change in terms of training time or engineering efforts.

In experiments on the CIFAR-10 and CIFAR-100 datasets, SuperLoss has been compared to the state of the art under different proportions of corrupted labels. More specifically, what is commonly defined as symmetric noise was used, i.e. a certain proportion of the training labels are replaced by other labels drawn from a uniform distribution. Detailed results for the two following cases are provided in Tables 3 and 4: (a) the new (noisy) label can remain equal to the original (true) label; and (b) the new label is drawn from a uniform distribution that exclude the true label. In said tables SuperLoss (SL) is compared to prior art approaches including: Self-paced (Kumar P. M. et al., "Self-paced learning for latent variable models", NIPS, 2010), Focal Loss (Lin T.Y. et al., "Focal loss for dense object detection", ICCV, 2017), MentorNet DD (Jiang, L. et al., "Mentornet: Learning data-driven curriculum for very deep neural networks on corrupted labels", ICML, 2018), Forgetting (Arpit D. et al., "A closer look at memorization in deep networks", ICML, 2017), Co-Teaching (Han B. et al., "Co-teaching: Robust training of deep neural networks with extremely noisy labels", NeurIPS, 2018), $L_q$ and Trunc $L_q$ (Zhang Z. et al., "Generalized cross entropy loss for training deep neural networks with noisy labels", NeurIPS, 2018), Reweight (Ren M. et al., "Learning to reweight examples for robust deep learning, ICML, 2018), D2L (Ma X. et al., "Dimensionality-driven learning with noisy labels", ICML, 2018), Forward $\hat{T}$ (Quin Z. et al., "Making deep neural networks robust to label noise: Cross-training with a novel loss function", IEEE access, 2019), SELF (Nguyen Duc T. et al., "Self: learning to filter noisy labels with self-ensembling", ICLR, 2019), Abstention (Thulasidasan S. et al., "Combating label noise in deep learning using abstention", ICML, 2019), CurriculumNet (Sheng et al., "Curriculumnet: Weakly-supervised learning for large-scale web images", ECCV, 2018), O2U-net(50) and O2Unet(10) (Jinchi H. et al., "O2U-Net: A simple noisy label detection approach for deep neural networks", ICCV, 2019), DivideMix (Li J. et al., "Dividemix: Learning with noisy labels as semi-supervised learning", ICLR, 2020), CurriculumLoss (Lyu Y. et al., "Curriculum loss: Robust learning and generalization against label corruption", ICLR, 2020), Bootstrap (Reed S. et al., "Training deep neural networks on noisy labels with bootstrapping", ICLR, 2015), F-correction (Patrini G. et al., "Making deep neural networks robust to label noise: A loss correction approach", CVPR, 2017), Mixup (Zhang H. et al., "Mixup: Beyond empirical risk minimization", ICLR, 2018), C-teaching+ (Yu X. et al., "How does disagreement help generalization against label corruption?", ICML, 2019), P-Correction (Yi K. et al., "Probabilistic end-to-end noise correction for learning with noisy labels", CVPR, 2019), Meta-Learning (Li J. et al., "Learning to learn from noisy labeled data", CVPR, 2019), Data Parameters (Saxena S. et al., "Data parameters: A new family of parameters for learning a differentiable curriculum", NeurIPS, 2019).

As can be seen from Tables 3 and 4, the SuperLoss (SL*) performs on par or better than most of the recent state-of-the-art approaches, including ones specifically designed for classification and requiring dedicated training procedure. SELF and DivideMix nevertheless outperform SuperLoss. However, they share the aforementioned limitations as both rely on ensembles of networks to strongly resist memorization. In contrast, the SuperLoss approach uses a single network trained with a baseline procedure without any special trick.

**Table 3**

| Method | CIFAR-10 | | | CIFAR-100 | | |
|---|---|---|---|---|---|---|
| | 20% | 40% | 60% | 20% | 40% | 60% |
| Self-paced | 89.0 | 85.0 | - | 70.0 | 55.0 | - |
| Focal Loss | 79.0 | 65.0 | - | 59.0 | 44.0 | - |
| MentorNet DD | 91.23 | 88.64 | - | 72.64 | 67.51 | - |
| Forgetting | 78.0 | 63.0 | - | 61.0 | 44.0 | - |
| Co-Teaching | 87.26 | 82.80 | - | 64.40 | 57.42 | - |
| $L_q$ | - | 87.13 | 82.54 | - | 61.77 | 53.16 |
| Trunc $L_q$ | - | 87.62 | 82.70 | - | 62.64 | 54.04 |
| Reweight | 86.9 | - | - | 61.3 | - | - |
| D2L | 85.1 | 83.4 | 72.8 | 62.2 | 52.0 | 42.3 |
| Forward $\hat{T}$ | - | 83.25 | 74.96 | - | 31.05 | 19.12 |
| SELF | - | 93.70 | 93.15 | - | 71.98 | 66.21 |
| Abstention | 93.4 | 90.9 | 87.6 | 75.8 | 68.2 | 59.4 |
| CurriculumNet | 84.65 | 69.45 | - | 67.09 | 51.68 | - |
| O2U-net(10) | 92.57 | 90.33 | - | 74.12 | 69.21 | - |
| O2U-net(50) | 91.60 | 89.59 | - | 73.28 | 67.00 | - |
| DivideMix | 96.2 | 94.9 | 94.3 | 77.2 | 75.2 | 72.0 |
| CurriculumLoss | 89.49 | 83.24 | 66.2 | 64.88 | 56.34 | 44.49 |
| SL*, $\tau = logC$ | 93.31±0.19 | 90.99±0.19 | 85.39±0.46 | 75.54±0.26 | 69.90±0.24 | 61.01±0.25 |
| SL*, $\tau = Avg$ | 93.16±0.17 | 91.05±0.18 | 85.52±0.53 | 75.02±0.08 | 71.06±0.17 | 61.96±0.11 |
| SL*, $\tau = ExpAvg$ | 92.98±0.11 | 91.06±0.23 | 85.48±0.13 | 74.34±0.26 | 70.96±0.26 | 62.39±0.17 |

**Table 4**

| Method | CIFAR-10 | | | | CIFAR-100 | | | |
|---|---|---|---|---|---|---|---|---|
| | 20% | 40% | 60% | 80% | 20% | 40% | 60% | 80% |
| Bootstrap | 86.8 | - | 79.8 | 63.3 | 62.1 | - | 46.6 | 19.9 |
| F-correction | 86.8 | - | 79.8 | 63.3 | 61.5 | - | 46.6 | 19.9 |
| Mixup | 95.6 | - | 87.1 | 71.6 | 67.8 | - | 57.3 | 30.8 |
| Co-teaching+ | 89.5 | - | 85.7 | 67.4 | 65.6 | - | 51.8 | 27.9 |
| P-Correction | 92.4 | - | 89.1 | 77.5 | 69.4 | - | 57.5 | 31.1 |
| Meta-Learning | 92.9 | - | 89.3 | 77.4 | 68.5 | - | 59.2 | 42.4 |
| Data Parameters | - | 91.10 ± 0.70 | - | - | - | 70.93 ± 0.15 | - | - |
| DivideMix | 96.1 | - | 94.6 | 93.2 | 77.3 | - | 74.6 | 60.2 |
| SL*, $\tau = logC$ | 93.39 ± 0.12 | 91.73 ± 0.17 | 90.11 ± 0.18 | 77.42 ± 0.29 | 74.76 ± 0.06 | 69.89 ± 0.07 | 66.67 ± 0.60 | 37.91 ± 0.93 |

(continued)

| Method | CIFAR-10 | | | | CIFAR-100 | | | |
|---|---|---|---|---|---|---|---|---|
| | 20% | 40% | 60% | 80% | 20% | 40% | 60% | 80% |
| SL*, $\tau = Avg$ | 93.16 ± 0.17 | 91.55 ± 0.18 | 90.21 ± 0.22 | 76.79 ± 0.60 | 74.73 ± 0.17 | 71.05 ± 0.08 | 67.84 ± 0.25 | 36.40 ± 0.09 |
| SL*, $\tau = ExpAvg$ | 93.03 ± 0.12 | 91.70 ± 0.33 | 89.98 ± 0.18 | 77.49 ± 0.29 | 74.65 ± 0.31 | 70.98 ± 0.26 | 67.21 ± 0.33 | 36.45 ± 0.80 |

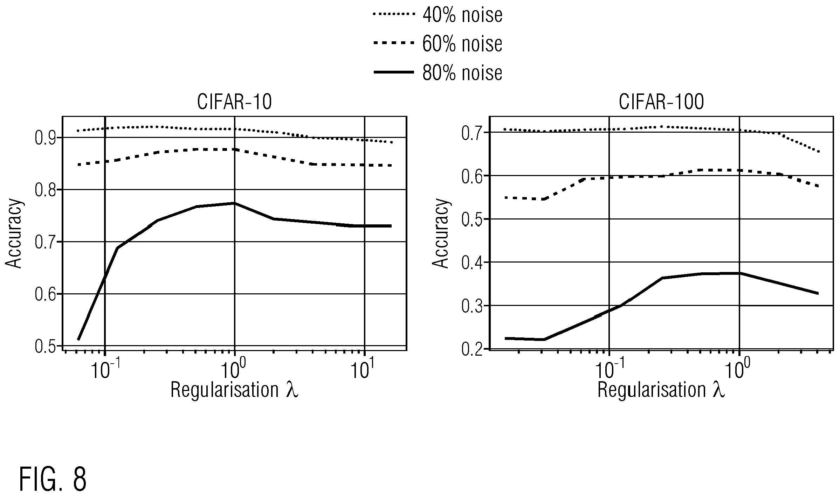

**FIG. 8** shows the impact of the regularization parameter $\lambda$ on CIFAR-10 and CIFAR-100 for different proportions of label corruption. $\tau = ExpAvg$ was used. Overall, the regularization has a moderate impact on the classification performance. At the exception of very high level of noise (80%), the performance plateaus for a relatively large range of regularization values. Importantly, the optimal value of $\lambda$ is approximately the same for all noise levels, indicating that our method can cope well with the potential variance of training sets in real use-cases.

**Evaluation of Superloss for Object Detection**

Experiments were performed for the object detection task on Pascal VOC (Everingham M. et al., "The Pascal visual objection classes (VOC) challenge, IJCV, 2010) and its noisy version (Junnan L. et al., "Towards noise-resistant objection detection with noisy annotations", arXiv: 2003.01285, 2020) where symmetric label noise is applied to 20%, 40% or 60% of the instances. Two object detection frameworks from detectron2 (https://github.com/facebookresearch/detectron2) are used: Faster R-CNN (Shaoquing R. et al., "Faster R-CNN: Towards real-time object detection with region proposal networks", NIPS, 2015) and RetinaNet (Tsung-Yi, L. et al., "Focal loss for dense object detection", ICCV, 2017).

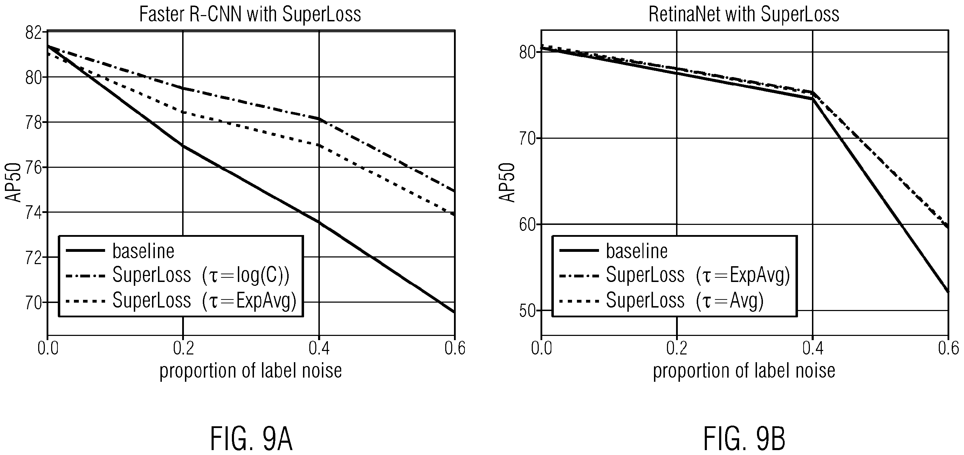

**FIG. 9** shows the standard AP50 metric for varying levels of noise using the SuperLoss, where the standard box classification loss is used as the baseline. Mean and standard deviation over 3 runs is shown. For the baseline, the default parameters from detectron2 have been used. For the SuperLoss, $\lambda = 1$ for clean data and $\lambda = 0.25$ for any other level of noise has been used, in all experiments, for both Faster R-CNN and RetinaNet. While the baseline and the SuperLoss are on par on clean data, the SuperLoss again significantly outperforms the baseline in the presence of noise. For instance, the performance drop (between 60% of label noise and clean data) is reduced from 12% to 8% for Faster R-CNN, and from 29% to 20% for Retina-Net. For $\tau$, we observe a slight edge for $\tau = log(C)$ with Faster R-CNN. The same fixed threshold makes no sense for RetinaNet as it does not rely on cross-entropy loss, but it is observed that global and exponential averaging perform similarly.

Table 5 compares SuperLoss to some state-of-the-art noise-robust approaches: Co-teaching (Han B. et al, "Co-teaching: Robust training of deep neural networks with extremely noisy labels", NeurIPS, 2018), SD-LocNet (Xiaopeng Z. et al., "Learning to localize objects with noisy label instances", AAAI, 2019), Note-RCNNN (Gao J. et al., "Note-RCNNN: Noise tolerant ensemble RCNNN for semi-supervised object detection", ICCV, 2019) and CA-BBC (Li J. et al., "Towards noise-resistant object detection with noisy annotations", ArXiv: 2003.01285, 2020).

|  | Label Noise | 0% | 20% | 40% | 60% |
|---|---|---|---|---|---|
| RetinaNet | Baseline | 80.6 | 77.5 | 74.6 | 52.0 |
| | SuperLoss ($\tau = ExpAvg$) | 80.5 | **78.1** | **75.3** | 59.6 |
| | SuperLoss ($\tau = Avg$) | **80.7** | 78.0 | 75.2 | **59.7** |
| Faster R-CNN | baseline | **81.4** | 76.9 | 73.6 | 69.5 |
| | SuperLoss ($\tau = ExpAvg$) | **81.4** | **79.5** | **78.1** | **74.9** |
| | SuperLoss ($\tau = Avg$) | 81.0 | 78.4 | 77.0 | 73.8 |
| | Co-teaching | 78.3 | 76.5 | 74.1 | 69.9 |

|  |  |  |  |  |  |
|---|---|---|---|---|---|
| | SD-LocNet | 78.0 | 75.3 | 73.0 | 66.2 |
| | Note RCNNN | 78.6 | 75.3 | 74.9 | 69.9 |
| | CA-BBC | 80.1 | 79.1 | 77.7 | 74.1 |

## Table 5

Once again, the simple and generic SuperLoss outperforms other approaches leveraging complex strategies to identify and/or correct noisy samples.

Tables 6, 7 and 8 show a comparison of SuperLoss with the baseline and the state of the art for object detection using the AP, AP50 and AP75 metrics on Pascal VOC. The tables also show the AP75 metric (i.e. the mean average precision (mAP) at a higher intersection-over-union (IoU) threshold of 0.75 instead of 0.5), as well as the AP metric, which is the average of mAP at varying IoU thresholds. For the baseline and the SuperLoss, both the mean and the standard deviation over 3 runs are reported. With both Faster R-CNN and RetinaNet object detection frameworks, it is observed that the SuperLoss allows to significantly increase the performance of the baseline in the presence of noise for all metrics. Interestingly, the SuperLoss also significantly reduces the variance of the model, which is pretty high in the presence of noise, in particular with RetinaNet.

| AP | | | | | |
|---|---|---|---|---|---|
| | Label noise | 0% | 20% | 40% | 60% |
| RetinaNet | Baseline | 54.9±0.5 | 51.0±0.2 | 48.7±0.3 | 34.9±0.6 |
| | SuperLoss $(\tau = ExpAvg)$ | 54.8±0.6 | 52.1±0.4 | **49.8±0.1** | **39.3±0.3** |
| | SuperLoss $(\tau = Avg)$ | **55.3±0.1** | **52.3±0.4** | **49.8±0.3** | **39.3±1.0** |
| Faster R-CNN | Baseline | **53.2±0.2** | 47.3±0.3 | 44.5±0.3 | 41.5±0.5 |
| | SuperLoss $(\tau = ExpAvg)$ | 52.7±0.1 | **50.8±0.1** | **49.3±0.1** | **46.6±0.2** |

| | SuperLoss $(\tau = Avg)$ | 52.5±0.2 | 49.0±0.2 | 48.5±0.3 | 46.4±0.3 |
|---|---|---|---|---|---|

**Table 6**

| AP50 | | | | | |
|---|---|---|---|---|---|
| | Label noise | 0% | 20% | 40% | 60% |
| **RetinaNet** | Baseline | 80.6±0.2 | 77.5±0.6 | 74.6±0.6 | 52.0±3.3 |
| | SuperLoss ($\tau = ExpAvg$) | 80.5±0.4 | **78.1±0.2** | **75.3±0.0** | 59.6±0.2 |
| | SuperLoss ($\tau = Avg$) | **80.7±0.2** | 78.0±0.1 | 75.2±0.8 | **59.7±1.6** |
| **Faster R-CNN** | Baseline | **81.4±0.0** | 76.9±0.2 | 73.6±0.2 | 69.5±0.4 |
| | SuperLoss ($\tau = ExpAvg$) | **81.4±0.1** | **79.5±0.3** | **78.1±0.1** | **74.9±0.1** |
| | SuperLoss ($\tau = Avg$) | 81.0±0.2 | 78.4±0.1 | 77.0±0.3 | 73.8±0.4 |
| | Co-teaching | 78.3 | 76.5 | 74.1 | 69.9 |
| | SD-LocNet | 78.0 | 75.3 | 73.0 | 66.2 |
| | Note RCNNN | 78.6 | 75.3 | 74.9 | 69.9 |
| | CA-BBC | 80.1 | 79.1 | 77.7 | 74.1 |

**Table 7**

| AP75 | | | | | |
|---|---|---|---|---|---|
| | Label noise | 0% | 20% | 40% | 60% |
| **RetinaNet** | Baseline | 59.7±0.5 | 55.6±0.7 | 51.8±0.5 | 36.8±2.4 |
| | SuperLoss $(\tau = ExpAvg)$ | 59.8±0.7 | 56.6±0.5 | **54.3**±0.3 | 42.7±0.4 |
| | SuperLoss $(\tau = Avg)$ | **60.6**±0.2 | **56.9**±0.3 | 54.1±0.4 | **42.8**±1.3 |
| **Faster R-CNN** | Baseline | **58.2**±0.2 | 50.4±0.8 | 46.8±0.1 | 43.2±0.7 |
| | SuperLoss $(\tau = ExpAvg)$ | 57.8±0.2 | **55.4**±0.2 | **53.6**±0.2 | 50.0±0.3 |
| | SuperLoss $(\tau = Avg)$ | 57.4±0.3 | 52.9±0.3 | 52.3±0.2 | **50.2**±0.5 |

## Table 8

### Evaluation of Superloss for Image Retrieval

SuperLoss was evaluated on the image retrieval task using the Revisited Oxford and Paris benchmark (Radenovic F et al., "Revisiting Oxford and Paris: Large-scale image retrieval benchmarking", CVPR, 2018). It is composed of two datasets, Oxford and Paris that consist of respectively 5,063 and 6,392 high-resolution images. Each dataset contains 70 queries from 11 landmarks. For each query, positive images are labelled as easy or hard positives. Each dataset is evaluated in terms of mean Average-Precision (mAP) using the medium (M) and hard (H) protocols which consist in respectively considering all positive images or only hard ones (i.e. ignoring easy ones).

For training, the large-scale Landmarks dataset (Babenko A. et al., "Neural codes for image retrieval", ECCV, 2014) that is composed of about 200K images (divided into 160K/40K for training/validation) gathered semi-automatically using search engines was selected. The fact that a cleaned version of the same dataset (released in Gordo A. et al., "Deep image retrieval: Learning global representations for image search", ECCV, 2016) comprises about 4 times less images gives a rough idea of the tremendous amount of noise it contains, and of the subsequent difficulty to leverage this data using standard loss functions. In order to establish a meaningful comparison the cleaned dataset is also used, which comprises 42K training and 6K validation images. Following Gordo A. et al., these datasets are referred to as Landmarks-full and Landmarks-clean. As retrieval model, ResNet-50 is used with Generalized-Mean (GeM) pooling and a contrastive loss (https://github.com/filipradenovic/cnnimageretrieval-pytorch). When training on Landmarks-clean, the default hyper-parameters from Radenovic F. *et al.* for the optimizer and the hard-negative mining procedure (100 epochs, learning rate of $10^{-6}$ with exponential decay of exp(-1/100), 2000 queries per epoch and 20K negative pool size) gives excellent results. In contrast, they lead to poor performance when training on Landmarks-full. The hyper-parameters for the baseline on the validation set of Landmarks-full were threrefore retuned and it was found that reducing the hard negative mining hyper-parameters is important (200 queries and 500 negative pool size). In all cases, the SuperLoss was trained with the same settings than the baseline using global averaging for $\tau$. At test time, Radenovic F *et al* was followed, using multiple scales and descriptor whitening.

The mean Average Precision (mAP) for different training sets and losses is reported in Table 9 below. Hardneg indicates (query size, pool size) used for hard-negative mining. On clean data, the SuperLoss has minor impact. However, it enables an impressive performance boost on noisy data (Landmarks-full), overall outperforming the baseline trained using clean data. Also included are state-of-the-art results trained and evaluated with identical code at the end of Table 9. SuperLoss performs slightly better than ResNet-101+GeM on RParis despite the deeper backbone and the fact that it is trained on SfM-120k, a clean dataset of comparable size requiring a complex and expensive procedure to collect.

**Table 9**

| Network+pooling | Training Set | Loss | Hard-neg | ROxf (M) | ROxf (H) | RPar (M) | RPar (H) | Avg |
|---|---|---|---|---|---|---|---|---|
| ResNet50+GeM | Landmarks-clean | Contrastive | 2K,20K | 61.1 | 33.3 | 77.2 | 57.2 | 57.2 |
| | | SuperLoss | 2K,20K | 61.3 | 33.3 | 77.0 | 57.0 | 57.2 |
| | Landmarks-full | Contrastive | 2K,20K | 41.9 | 17.5 | 65.0 | 39.4 | 41.0 |
| | | Contrastive | 200,500 | 54.4 | 28.7 | 72.6 | 50.2 | 51.4 |
| | | SuperLoss | 200,500 | 62.7 | 38.1 | 77.0 | 56.5 | 58.6 |
| ResNet-101+GeM | SfM-120k (clean) | Contrastive | 2K,20K | 65.4 | 40.1 | 76.7 | 55.2 | 59.3 |

When training on Landmarks-clean, the default hyper-parameters from Radenovic F. *et al.* were used for the optimizer and hard-negative mining. Specifically, training was performed for 100 epochs using the Adam optimizer with a learning rate and weight decay both set to 1e-6. The learning rate is exponentially decayed by exp(-1) overall. At each epoch, 2000 tuples are fed to the network in batches of 5 tuples. Each tuple is composed of 1 query, 1 positive and 5 negatives (i.e. 1 positive pair and 5 negative pairs, mined from a pool of 20K hard-negative samples).

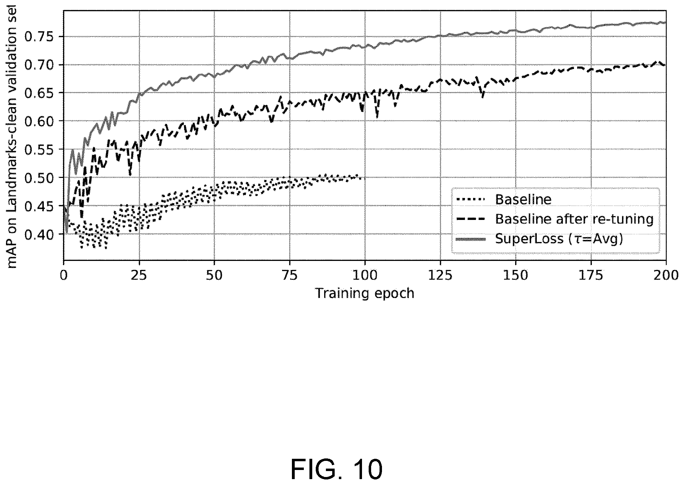

FIG. 10 is a plot of model convergence during training on the noisy Landmarked-full dataset. As can be seen from the figure, when trained on the noisy Landmarks-full dataset using the same settings, the baseline has trouble to converge and performs poorly. This is due to the fact that hard-negative mining systematically finds wrongly labeled negative pairs that prevent the model to properly learn. For this reason, the learning rate and the hard-negative mining parameters of the baseline on the validation set of Landmarks-full. Reducing the size of the negative pool indeed improves the situation as it makes it less likely that noisy negative images are found. The new learning rate, number of tuples and size of the negative pool are respectively 1e-5, 200 and 500. Since the network sees less tuples per epoch (and hence less pairs), training is performed for twice as long (200 epochs instead of 100) with the same overall exponential decay of the learning rate. For the SuperLoss, global averaging is used to compute $\tau$ and validate $\lambda = 0.05$ on the validation set. The convergence of the re-tuned baseline and the SuperLoss are shown in FIG. 10. Even though the baseline drastically improves and now converges properly, it is still outperformed by a large margin by the SuperLoss at all stages of the training.

While some specific embodiments have been described in detail above, it will be apparent to those skilled in the art that various modifications, variations and improvements of the embodiments may be made in the light of the above teachings and within the content of the appended claims without departing from the intended scope of the embodiments. In addition, those areas in which it is believed that those of ordinary skill in the art are familiar have not been described herein in order not to unnecessarily obscure the embodiments described herein. Accordingly, it is to be understood that the embodiments are not to be limited by the specific illustrative embodiments, but only by the scope of the appended claims.

Although the above embodiments have been described in the context of method steps, they also represent a description of a corresponding component, module or feature of a corresponding apparatus or system.

Some or all of the method steps may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as a computer program product with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor. In a further embodiment, an apparatus comprises one or more processors and the storage medium mentioned above.

In a further embodiment, an apparatus comprises means, for example processing circuitry like e.g. a processor communicating with a memory, the means being configured to, or adapted to, perform one of the methods described herein.

A further embodiment comprises a computer having installed thereon the computer program or instructions for performing one of the methods described herein.

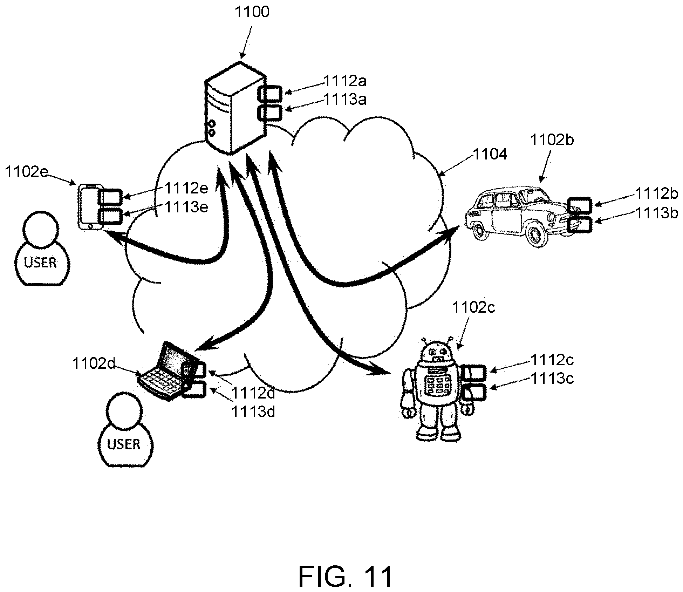

The above-mentioned methods and embodiments may be implemented within an architecture such as illustrated in **FIG. 11,** which comprises server 1100 and one or more client devices 1102 that communicate over a network 1104 (which may be wireless and/or wired) such as the Internet for data exchange. Server 1100 and the client devices 1102 include a data processor 1112 and memory 1113 such as a hard disk. The client devices 1102 may be any device that communicates with server 1100, including autonomous vehicle 1102b, robot 1102c, computer 1102d, or cell phone 1302e.

More precisely in an embodiment, the techniques according to the embodiments described herein may be performed at server 1100. In other embodiments, the techniques according to the embodiments described herein may be performed at client device 1102. In yet other embodiments, the techniques described in said embodiments may be performed at a different server or on a plurality of servers in a distributed manner.

## Claims

1. A computer-implemented method for training a neural network to perform a data processing task, comprising:
   for each data sample of a set of labeled data samples:

   computing a task loss for the data sample using a first loss function for the data processing task;
   computing a second loss for the data sample by inputting the task loss into a second loss function, the second loss function automatically computing a weight of the data sample based on the task loss computed for the data sample to estimate reliability of a label of the data sample predicted by the neural network; and
   updating at least some learnable parameters of the neural network using the second loss.

2. The method of claim 1, wherein automatically computing a weight of the data sample based on the task loss computed for the data sample comprises increasing the weight of the data sample if the task loss is below a threshold value and decreasing the weight of the data sample if the task loss is above the threshold value.

3. The method of claim 1 or 2, wherein the threshold value is computed using a running average of the task loss or an exponential running average of the task loss with a fixed smoothing parameter.

4. The method of claim 2 or 3, wherein the second loss function comprises a loss-amplifying term based on a difference between the task loss and the threshold value.

5. The method of one of claims 1 to 4, wherein the second loss function is given by $min\{\ell - \tau, \lambda(\ell - \tau)\}$ with $0 < \lambda < 1$, where $\ell$ is the task loss, $\tau$ is the threshold value and $\lambda$ is an hyperparameter of the second loss function.

6. The method of one of claims 1 to 4, further comprising computing a confidence value of the data sample based on the task loss.

7. The method of claim 6, wherein computing the confidence value of the data sample based on the task loss comprises determining a value of a confidence parameter that minimizes the second loss function for the task loss.

8. The method of claim 6 or 7, wherein the confidence value depends on $\dfrac{(\ell - \tau)}{\lambda}$, where $\ell$ is the task loss, $\tau$ is the threshold value and $\lambda$ is a regularization hyperparameter of the second loss function.

9. The method of one of claims 6 to 8, wherein the loss-amplifying term is given by $\sigma^*(\ell - \tau)$, where $\sigma^*$ is the confidence value.

10. The method of one of claims 6 to 9, wherein the second loss function comprises a regularization term that given by $\lambda(log^*)^2$, where $\sigma^*$ is the confidence value.

11. The method of one of claims 6 to 10, wherein the second loss function is given by $\min_{\sigma}(\sigma(\ell - \tau) + \lambda(log\sigma)^2)$,

where $\sigma$ is the confidence parameter, $\ell$ is the task loss, $\tau$ is the threshold value and $\lambda$ is a hyperparameter of the second loss function.

12. The method of one of the preceding claims, wherein the second loss function is a monotonically increasing concave function with respect to the task loss, and, optionally, wherein the second loss function is a homogeneous function.

13. A neural network trained in accordance with the method of one of claims 1 to 12 to perform an image processing task.

14. A computer-readable storage medium having computer-executable instructions stored thereon, which, when executed by one or more processors perform the method of one of claims 1 to 12.

15. An apparatus comprising processing circuitry, the processing circuitry being configured to perform the method of one of claims 1 to 12.

FIG. 1

Confidence across training (epoch)

FIG. 2A

- – – learned σ for an easy sample
- ⋯⋯ learned σ for a hard sample
- —— optimal σ* for an easy sample
- –·– optimal σ* for a hard sample

Input loss across training

FIG. 2B

- – – loss for an easy sample
- ⋯⋯ loss for a hard sample

EP 3 982 299 A1

FIG. 3

400

Input a set of labeled data samples — 410

Select a data sample — 420

Compute a task loss for the data sample — 430

Compute a super loss for the data sample — 440

Update parameters of the neural network — 450

Unselected data sample in the set? — 460

Yes

No

Number of epochs = N? — 470

No

Yes

Conclude training — 480

FIG. 4

FIG. 5

FIG. 6

Results on CIFAR-10

Results on CIFAR-100

Focal Loss (2016)
Self-paced (2016)
MentorNet DD (2017)
CO-teaching (2018)
CO-teaching+ (2019)
$L_q$ (2018)
Trunc-$L_q$ (2018)
D2L (2018)
Abstention (2019)
CurriculumNet (2019)
F-correction (2017)
P-correction (2019)
Meta-Learning (2019)
Mixup
O2U-Net (2019)
Data Parameters (2019)
SuperLoss ($\tau$=ExpAvg)
SuperLoss ($\tau$=Avg)
SuperLoss ($\tau$=2.3)

FIG. 7

FIG. 8

FIG. 9A

FIG. 9B

FIG. 10

FIG. 11

Europäisches
Patentamt

European
Patent Office

Office européen
des brevets

## EUROPEAN SEARCH REPORT

Application Number

EP 20 30 6187

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WENJIE WANG ET AL: "Denoising Implicit Feedback for Recommendation", ARXIV.ORG, CORNELL UNIVERSITY LIBRARY, 201 OLIN LIBRARY CORNELL UNIVERSITY ITHACA, NY 14853, 7 June 2020 (2020-06-07), XP081692905, * sections 3, 3.1, 3.3.1 and 3.3.2 * | 1-15 | INV. G06N3/08 |
| A | US 2020/265273 A1 (WEI HAIQI [CA] ET AL) 20 August 2020 (2020-08-20) * paragraph [0243] - paragraph [0245] * | 1-15 | |
| A | EP 3 582 150 A1 (FUJITSU LTD [JP]) 18 December 2019 (2019-12-18) * paragraph [0018] - paragraph [0021] * | 1-15 | |

TECHNICAL FIELDS
SEARCHED      (IPC)

G06N

The present search report has been drawn up for all claims

| Place of search | Date of completion of the search | Examiner |
|---|---|---|
| Munich | 23 March 2021 | Regidor Arenales, R |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

EP 3 982 299 A1

## ANNEX TO THE EUROPEAN SEARCH REPORT
## ON EUROPEAN PATENT APPLICATION NO.

EP 20 30 6187

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2021

| Patent document cited in search report | | Publication date | Patent family member(s) | | Publication date |
|---|---|---|---|---|---|
| US 2020265273 | A1 | 20-08-2020 | US | 2020265273 A1 | 20-08-2020 |
| | | | WO | 2020163970 A1 | 20-08-2020 |
| EP 3582150 | A1 | 18-12-2019 | CN | 110598840 A | 20-12-2019 |
| | | | EP | 3582150 A1 | 18-12-2019 |
| | | | JP | 2019215861 A | 19-12-2019 |
| | | | US | 2019385086 A1 | 19-12-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BASU S. et al.** Teaching Classification Boundaries to Humans. *AAAI,* 2013
- **BENGIO Y. et al.** Curriculum Learning. *ICML,* 2009
- **HACOHEN G. et al.** On the power of curriculum learning in deep networks. *ICML,* 2019
- **KAHN F.** How do humans teach: On curriculum learning and teaching dimension. *NIPS,* 2011
- **SHENG G. et al.** Curriculumnet: Weakly-supervised learning for large-scale web images. *ECCV,* 2018
- **KUMAR M.P. et al.** Self-paced learning for latent variable models. *NIPS,* 2010
- **SAXENA S. et al.** Data parameters: a new family of parameters for learning a differentiable curriculum. *NeurIPS,* 2019
- **NOVOTNY D. et al.** Self-supervised learning of geometrically stable features through probabilistic introspection. *CVPR,* 2018
- **REVAUD J. et al.** R2D2: Reliable and repeatable detector and descriptor. *NeurIPS,* 2019
- **KENDALL A. et al.** Multi-task learning using uncertainty to weigh losses for scene geometry and semantics. *CVPR,* 2018
- **LYU Y. et al.** Curriculum loss: Robust learning and generalization against label corruption. *ICLR,* 2020
- **JINCHI H. et al.** O2U-Net: A simple noisy label detection approach for deep neural networks. *ICCV,* 2019
- **ARAZO E. et al.** Unsupervised label noise modeling and loss correction. *ICML,* 2019
- **LI J. et al.** Dividemix: Learning with noisy labels as semi-supervised learning. *ICLR,* 2020
- **NGUYEN DUC T. et al.** SELF: learning to filter noisy labels with self-ensembling. *ICLR,* 2019
- **HAN B. et al.** Co-teaching: Robust training of deep neural networks with extremely noisy labels. *ICCV,* 2019
- **SHAOQUING R.** Faster R-CNN: Towards real-time object detection with region proposal networks. *NIPS,* 2015
- **LIN, T.Y. et al.** Focal Loss for dense object detection. *ICCV,* 2017
- **HADSELL R. et al.** Dimensionality reduction by learning an invariant mapping. *CVPR,* 2006

- **RADENOVIC F. et al.** Fine tuning cnn image retrieval with no human annotation. *IEEE trans. PAMI,* 2018
- **WEINBERGER K.Q. et al.** Distance metric learning for large margin nearest neighbor classification. *JMLR,* 2009
- **LECUN Y. et al.** MNIST handwritten digit database. *ICPR,* 2010
- **ZHANG Z. et al.** Age progression/regression by conditional adversarial autoencoder. *CVPR,* 2017
- **KRIZHEVSKY A.** *Learning multiple layers of features from tiny images,* 2009, https.-//www.cs.toronto.edu/~kriz/learning-features-2009-TR.pdf
- **LI W. et al.** Webvision database: Visual learning and understanding from web data. *arXiv:1708.02862,* 2017
- **KUMAR P. M. et al.** Self-paced learning for latent variable models. *NIPS,* 2010
- **LIN T.Y. et al.** Focal loss for dense object detection. *ICCV,* 2017
- **JIANG, L. et al.** Mentornet: Learning data-driven curriculum for very deep neural networks on corrupted labels. *ICML,* 2018
- **ARPIT D. et al.** A closer look at memorization in deep networks. *ICML,* 2017
- **HAN B. et al.** Co-teaching: Robust training of deep neural networks with extremely noisy labels. *NeurIPS,* 2018
- **ZHANG Z. et al.** Generalized cross entropy loss for training deep neural networks with noisy labels. *NeurIPS,* 2018
- **REN M. et al.** Learning to reweight examples for robust deep learning. *ICML,* 2018
- **MA X. et al.** Dimensionality-driven learning with noisy labels. *ICML,* 2018
- **QUIN Z. et al.** Making deep neural networks robust to label noise: Cross-training with a novel loss function. *IEEE access,* 2019
- **NGUYEN DUC T. et al.** Self: learning to filter noisy labels with self-ensembling. *ICLR,* 2019
- **THULASIDASAN S. et al.** Combating label noise in deep learning using abstention. *ICML,* 2019
- **SHENG et al.** Curriculumnet: Weakly-supervised learning for large-scale web images. *ECCV,* 2018
- **REED S. et al.** Training deep neural networks on noisy labels with bootstrapping. *ICLR,* 2015

- **PATRINI G. et al.** Making deep neural networks robust to label noise: A loss correction approach. *CVPR,* 2017
- **ZHANG H. et al.** Mixup: Beyond empirical risk minimization. *ICLR,* 2018
- **YU X. et al.** How does disagreement help generalization against label corruption?. *ICML,* 2019
- **YI K. et al.** Probabilistic end-to-end noise correction for learning with noisy labels. *CVPR,* 2019
- **LI J. et al.** Learning to learn from noisy labeled data. *CVPR,* 2019
- **SAXENA S. et al.** Data parameters: A new family of parameters for learning a differentiable curriculum. *NeurIPS,* 2019
- **EVERINGHAM M. et al.** The Pascal visual objection classes (VOC) challenge. *IJCV,* 2010
- **JUNNAN L. et al.** Towards noise-resistant objection detection with noisy annotations. *arXiv: 2003.01285,* 2020
- **SHAOQUING R. et al.** Faster R-CNN: Towards real-time object detection with region proposal networks. *NIPS,* 2015
- **TSUNG-YI, L. et al.** Focal loss for dense object detection. *ICCV,* 2017
- **XIAOPENG Z. et al.** Learning to localize objects with noisy label instances. *AAAI,* 2019
- **GAO J. et al.** Note-RCNNN: Noise tolerant ensemble RCNNN for semi-supervised object detection. *ICCV,* 2019
- **LI J. et al.** Towards noise-resistant object detection with noisy annotations. *ArXiv: 2003.01285,* 2020
- **RADENOVIC F et al.** Revisiting Oxford and Paris: Large-scale image retrieval benchmarking. *CVPR,* 2018
- **BABENKO A. et al.** Neural codes for image retrieval. *ECCV,* 2014
- **GORDO A. et al.** Deep image retrieval: Learning global representations for image search. *ECCV,* 2016